# EUROPEAN PATENT SPECIFICATION

(11) **EP 2 689 997 B1**
(45) Date of publication and mention of the grant of the patent: **08.04.2015**
(21) Application number: 13156110.2
(22) Date of filing: 21.02.2013
(51) Int. Cl.: B62M 6/65, B62J 6/12

(54) **Electric hub unit**
Elektrische Nabeneinheit
Unité de moyeu électrique

(30) Priority: 24.07.2012 TW 101214280 U
(43) Date of publication of application: 29.01.2014
(73) Proprietor: Joy Industrial Co., Ltd., Taichung Hsien (TW)
(72) Inventor: Chen, Chun-Hsung, Taichung Hsien (TW)
(74) Representative: Chaillot, Geneviève

(56) References cited:
- EP-A1- 1 394 030
- US-A- 6 007 447

## Description

### FIELD OF THE INVENTION

The present invention relates to an electric hub unit, and more particularly, to an electric hub unit with an improved arrangement between the sleeve and the hub to prevent foreign objects from entering the hub unit.

### BACKGROUND OF THE INVENTION

The electric bicycles are developed to correspond the environmental issues and reduce carbon generated which contaminates the environment. The conventional electric bicycles comprise an electric device which drives the bicycle forward. Also, the conventional electric bicycles can be operated electrically and manually.

Generally, the electric device is installed to the rear wheel hub and the hub is connected with a chain on one end thereof so as to provide the flexibility of operations by either electric power or manual power.

European Patent Application EP 1394030 discloses an electric hub as defined in the preamble of claim 1.

Taiwan Utility Application No. 087206708 discloses a fixed axle with an active gear connected to the axle and the active gear is driven by a first driving unit cooperated with an electro-magnetic driving member. A toothed ring is pivotably connected to the axle. A planet gear unit is connected to the active gear and located between the active gear and the toothed ring. The planet gear unit is rotated about the active gear and drive the toothed ring. A driving part drives the wheel. A second driving unit is a one-way driving unit and located between the driving part and the toothed ring which drive the driving part in one direction. The driving part is freely rotated while the toothed ring is not driven.

Taiwan Utility Application No. 092121507 discloses an axle connected to the bicycle frame and two protrusions protrude from the outer periphery of the axle. A casing is mounted to the outside of the axle. Two bearings are cooperated with the axle which is rotated smoothly. A generating device is located between the axle and the casing and generates power by the relative rotational movement between the casing and the axle. The gear cluster is connected to the first side of the casing and cannot rotate backward. A freewheel is connected to the casing and transfers the forward force to the bicycle.

The electro-magnetic driving member of Taiwan Utility Application No. 087206708 is securely connected to the axle and located on one side of the driving part (casing). The driving force from the electro-magnetic device is transferred to the active gear via the first driving unit and the driving force then is transferred to the toothed ring via the planet gear unit. The toothed ring transferred the driving force to the driving part via the one-way second driving unit. The driving part is individually rotated while the toothed ring and the planet gear unit are not driven. Taiwan Utility Application No. 092121507 installs the generating device between the casing and the axle. The flywheel is connected to the first side of the casing and cooperated with the gear cluster connected with a chain to drive the casing. The generating device of Taiwan Utility Application No. 092121507 is located within the casing, nevertheless, there is no bearing located between the flywheel and the cover. Besides, the sealing feature between the flywheel and the cover is poor so that the water easily enters into the inside of the generating device.

The present invention intends to provide an improved electric hub unit for bicycles and improves the shortcomings of the conventional electric hub units.

### SUMMARY OF THE INVENTION

The present invention relates to an electric hub unit and comprises a hub composed of first casing and a second casing. An electric unit is located between the first and second casings. An axle extends through two respective centers of the first and second casings. The first casing has a reception recess defined in one side thereof and multiple notches are defined in the inner periphery of the reception recess. A first extension and a second extension extend axially from the first casing and toward in opposite directions. A bearing is located in the inside of the second extension. A socket unit has a tubular portion which has a stepped portion extending radially from outside of the tubular portion. A ratchet unit has a base and a ratchet ring, wherein the base is located to the stepped portion and has multiple pawls. The ratchet ring has multiple teeth which are located corresponding to the notches. The ratchet ring has multiple ratchet teeth defined in the inner periphery thereof. The ratchet ring is located in the reception recess. The teeth are engaged with the notches. The socket unit is mounted to outside of the first casing and mounted to the axle. The pawls are engaged with the ratchet teeth. A bearing and a plate are located between the stepped portion of the tubular portion and the first extension.

The primary object of the present invention is to provide an electric hub unit which comprises a hub composed of first casing and a second casing. The first casing has a reception recess defined in the first side thereof and a first extension extends outward from the first side. The first casing has a second extension extending inward from the second side thereof. The ratchet unit of the socket unit is located in the reception recess and a first plate is located between the first extension and the tubular portion. A second plate is located in the inside of the socket unit and away from the first casing. By the first and second plates, water and foreign objects are prevented from entering the hub.

Another object of the present invention is to provide an electric hub unit wherein a bearing is located in the second extension of the first casing and the bearing is cooperated with two bearings in the tubular portion of the socket unit to support the axle.

Yet another object of the present invention is to provide an electric hub unit wherein the first casing has multiple ribs on the inside thereof to reinforce the strength of the first casing.

A further object of the present invention is to provide an electric hub unit wherein a ratchet unit is connected to the socket unit and has multiple pawls. A positioning member is connected to the base of the ratchet unit and contacts the pawls to position the pawls.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the electric hub unit of the present invention;
Fig. 2 is an exploded view to show the electric hub unit of the present invention;
Fig. 3 is another exploded view to show the electric hub unit of the present invention;
Fig. 4 is a partial cross sectional view to show the electric hub unit of the present invention, and
Fig. 5 is an enlarged cross sectional view to show the electric hub unit of the present invention.

### DETAILED DESCRIPTION OF THE PREFERRED EMBODIMENT

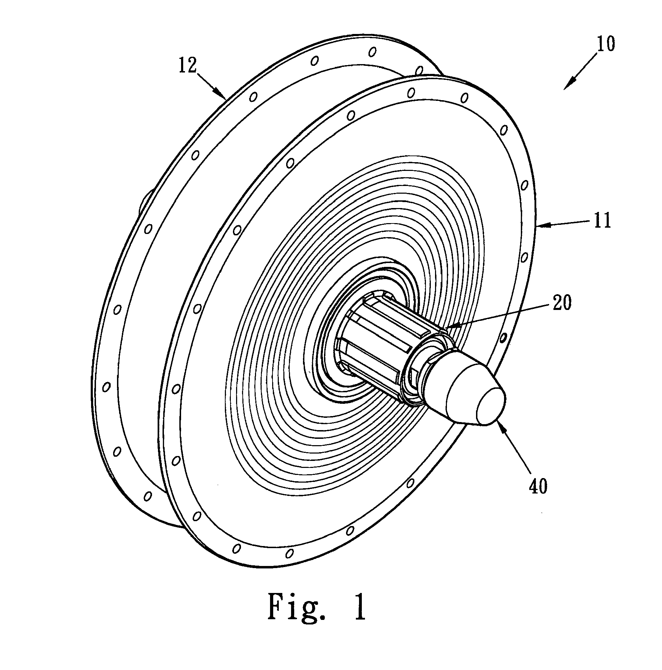

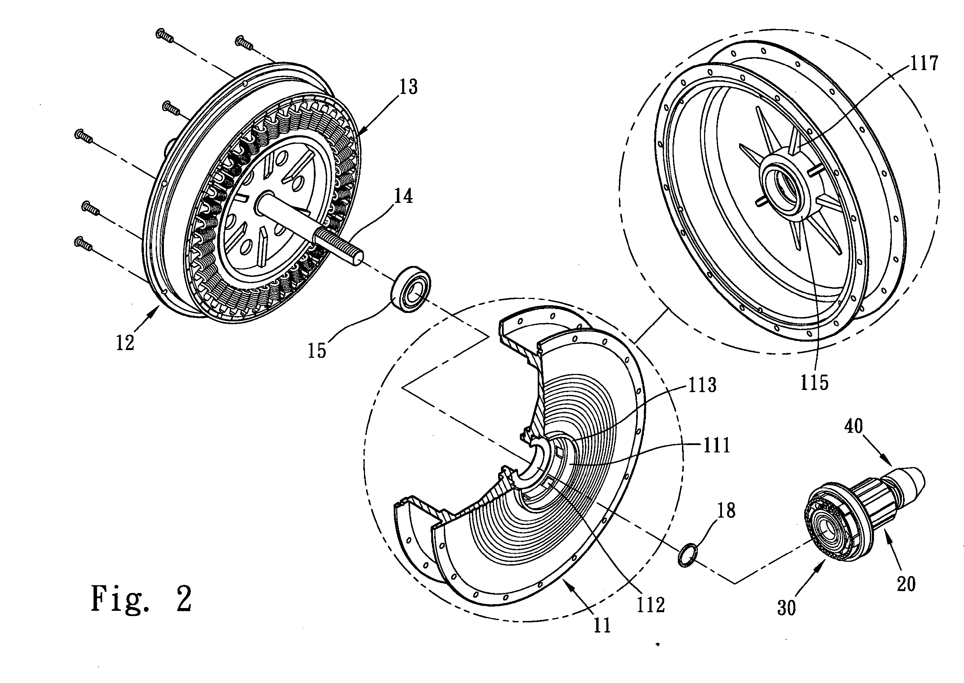

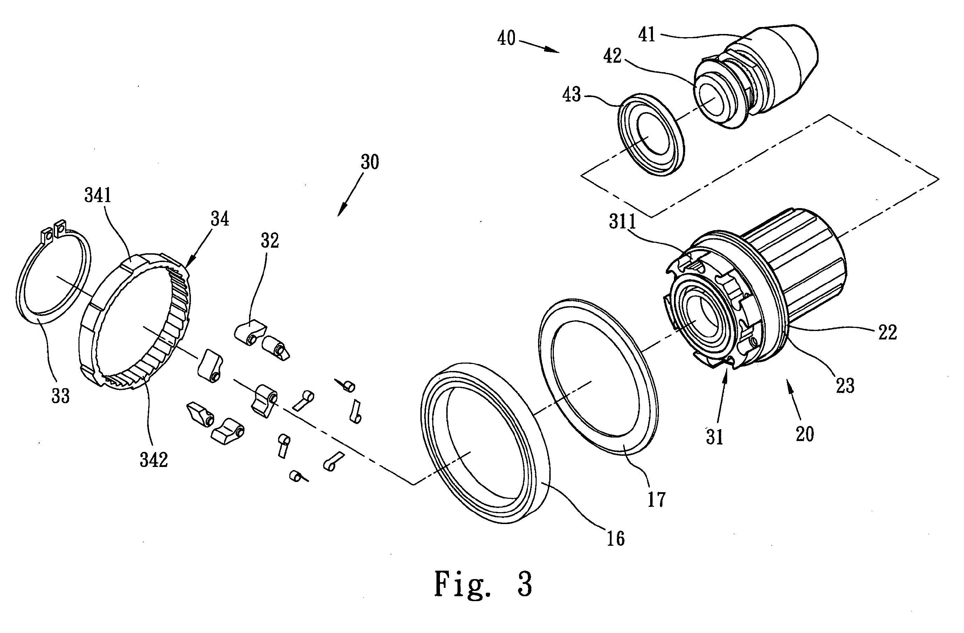

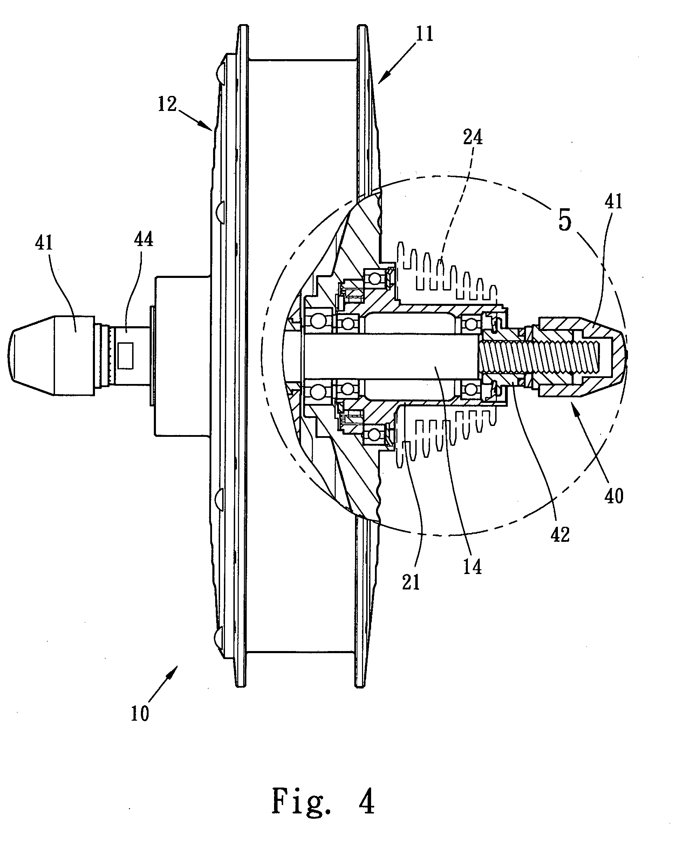

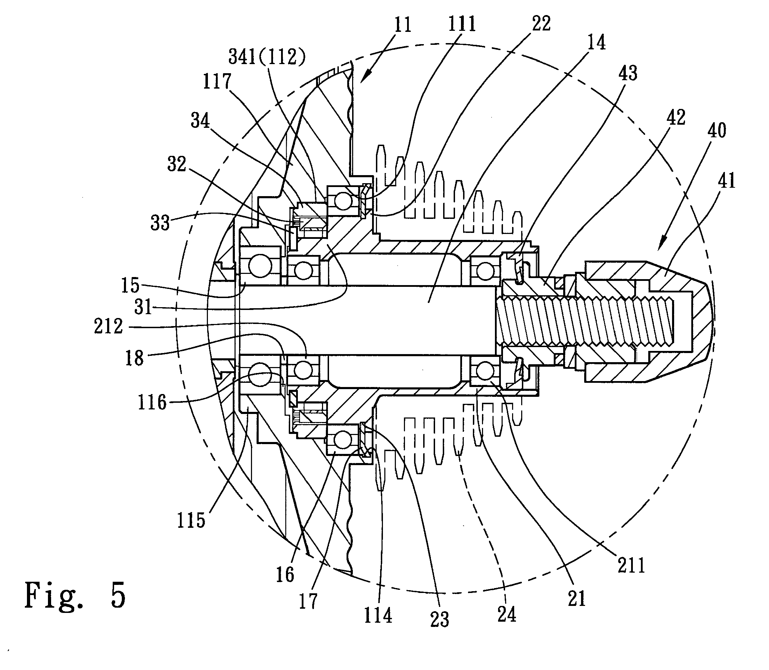

Referring to Figs. 1 to 5, the electric hub unit of the present invention comprises a hub 10, a socket unit 20 connected to one side of the hub 10, a ratchet unit 30 and two securing units 40.

The hub 10 is a hollow hub and composed of first casing 11 and a second casing 12. An electric unit 13 for providing electric power is located between the first and second casings 11, 12. An axle 14 extends through two respective centers of the first and second casings 11, 12. The first casing 11 has a reception recess 111 defined in one side thereof and multiple notches 112 are defined in the inner periphery of the reception recess 111. A tubular first extension 113 extends from the first casing 11 and along the axis of the reception recess 111. A groove 114 is defined in the inner periphery of the first extension 113. A tubular second extension 115 extends from the first casing 11 and along the axis of the reception recess 111. The first and second extensions 113, 115 extend toward in opposite directions. A stop 116 extends inward and radially from the inner periphery of the second extension 115. A bearing 15 is located in the inside of the second extension 115 and contacts one side of the stop 116. The first casing 11 has multiple ribs 117 extending radially from the inner periphery thereof and located around the second extension 115. Each of the ribs 117 has a thickness which is gradually narrowed toward the direction away from the second extension 115.

The socket unit 20 has a tubular portion 21 and two bearings 211, 212 are located in two inner sides of the tubular portion 21. A stepped portion 22 extends radially from outside of the tubular portion 21 and a positioning slot 23 is defined radially in the stepped portion 22. The tubular portion 21 further has a flywheel unit 24 mounted thereto so as to drive the socket unit 20, and the flywheel unit 24 is a gear cluster.

The ratchet unit 30 has a base 31, multiple pals 32 and a ratchet ring 34, wherein the base 31 is integrally formed on one side of the located to the stepped portion 22 and has multiple engaging recesses 311 with which the pawls 32 are received. The base 31 has a positioning member 33 which contacts the pawls 32 to prevent the pawls 32 from disengaging from the engaging recesses 311. In this embodiment, the positioning member 33 is a C-shaped clip. The ratchet ring 34 has multiple teeth 341 which are located corresponding to the notches 112. The ratchet ring 34 has multiple ratchet teeth 342 defined in the inner periphery thereof. The ratchet ring 34 is located in the reception recess 111 and the teeth 341 are engaged with the notches 112. The socket unit 20 is mounted to outside of the first casing 11 and mounted to the axle 14. The pawls 32 engaged with the ratchet teeth 342 so as to co-rotate the ratchet ring 34 and the hub 10. A bearing 16 and a rig-shaped first plate 17 are located between the stepped portion 22 of the tubular portion 21 and the first extension 113. The inner and outer portions of the first plate 17 are respectively engaged with the positioning slot 23 and the groove 114. By the first plate 17, water and foreign objects can be prevented from entering the hub 10. A washer 18 is mounted to the axle 14 and located between the bearing 15 in the second extension 115 and the bearing 212.

The two securing units 40 are connected to two ends of the axle 14 and each securing unit 40 has a locking member 41 and a contact part. A first contact part 42 is located between the locking member 41 on one side of the first casing 11 and the tubular portion 21. By locking the locking member 41, the first contact part 42 contacts one end of the bearing 211. A second plate 43 is located between the first contact part 42 and the inner periphery of the tubular portion 21 to prevent water from entering the tubular portion 21. A second contact part 44 is located between the locking member 41 and the second casing 12. The second contact part 44 contacts the second casing 12. The first and second contact parts 42, 44 are adapted to be connected with seat stays of a bicycle.

When assembling, the first and second casings 11, 12 are connected to each other to form the hub 10, and the axle 14 extends through the center of the hub 10. The ratchet unit 30 on one end of the socket unit 20 is installed in the reception recess 111 of the first casing 11 and the flywheel unit 24 is mounted to the tubular portion 21.The securing units 40 are then fixed to the two ends of the axle 14 to finish the assembly.

The tubular first extension 113 extends from the first casing 11 and along the axis of the reception recess 111 and the tubular second extension 115 extends from the first casing 11 and along the axis of the reception recess 111. The first and second extensions 113, 115 extend toward in opposite directions. The rig-shaped first plate 17 is located between the stepped portion 22 of the tubular portion 21 and the first extension 113. The washer 18 is mounted to the axle 14 and located between the bearing 15 in the second extension 115 and the bearing 212. The first and second plates 17, 43 prevent water and foreign objects from entering the tubular portion 21. The second extension 115 has the bearing 15 which is cooperated with the bearings 211, 212 in the tubular portion 21 to allow the axle 14 rotate smoothly.

The multiple ribs 117 extend radially from the inner periphery of the first casing 11 and are located around the second extension 115 so as to reinforce the strength of the hub 10.The ratchet unit 31 located on the tubular portion 21 is cooperated with the pawls 32, and the positioning member 33 contacts the pawls 32 to well position the pawls 32.

The first casing 11 has a reception recess 111 defined in the first side thereof and the first and second extensions 113, 115 extend in opposite directions from the first casing 11. The socket unit 20 is located in the reception recess 111 and the first plate 17 is located between the first extension 113 and the tubular portion 21 to prevent water and foreign objects from entering the hub. The bearing 15 located in the second extension 115 and the axle 14 to allow the axle 14 to rotate smoothly.

While we have shown and described the embodiment in accordance with the present invention, it should be clear to those skilled in the art that further embodiments may be made without departing from the scope of the present invention.

## Claims

1. An electric hub unit comprising:
a hub (10) being a hollow hub and composed of first casing (11) and a second casing (12), an electric unit (13) located between the first and second casings (11, 12), an axle (14) extending through two respective centers of the first and second casings (11, 12), the first casing (11) having a reception recess (111) defined in one side thereof and multiple notches (112) defined in an inner periphery of the reception recess (111), a first extension (113) and a second extension (115) extending axially from the first casing (11) and toward in opposite directions,
**characterized by** the fact that it further comprises:
a bearing (15) located in an inside of the second extension (115);
a socket unit (20) having a tubular portion (21) which has a stepped portion (22) extending radially from outside of the tubular portion (21);
a ratchet unit (30) having a base (31) and a ratchet ring (34), the base (31) located to the stepped portion (22) and having multiple pawls (32), the ratchet ring (34) having multiple teeth (341) which are located corresponding to the notches (112), the ratchet ring (34) having multiple ratchet teeth (342) defined in an inner periphery thereof, the ratchet ring (34) located in the reception recess (111), the teeth (341) engaged with the notches (112), the socket unit (20) mounted to outside of the first casing (11) and mounted to the axle (14), the pawls (32) engaged with the ratchet teeth (342), a bearing (16) and a plate (17) located between the stepped portion (22) of the tubular portion (21) and the first extension (113).

2. The electric hub unit as claimed in claim 1, wherein multiple notches (112) are defined axially in the inner periphery of the reception recess (111), a tubular first extension (113) extends axially from the first casing (11) and a groove (114) is defined in an inner periphery of the first extension (113), the stepped portion (22) of the tubular portion (21) has a positioning slot (23) defined radially therein, the ring-shaped first plate (17) is located between the groove (114) and the positioning slot (23), a tubular second extension (115) extends axially from the first casing (11) and toward a direction opposite to that of the first extension (113), a stop (116) extends inward and radially from an inner periphery of the second extension (115), the bearing (15) is located in the inside of the second extension (115) and contacts one side of the stop (116).

3. The electric hub unit as claimed in claim 1, wherein the first casing (11) has multiple ribs (117) extending radially from the inner periphery thereof and located around the second extension (115), each of the ribs (117) has a thickness which is narrowed toward a direction away from the second extension (115).

4. The electric hub unit as claimed in claim 1, wherein the tubular portion (21) has a flywheel unit (24) mounted thereto so as to drive the socket unit (20).

5. The electric hub unit as claimed in claim 1, wherein the base (31) is integrally formed with the stepped portion (22) and has multiple engaging recesses (311) defined radially therein, the pawls (32) are located in the engaging recesses (311), the base (31) has a positioning member (33) which contacts the pawls (32).

6. The electric hub unit as claimed in claim 5, wherein the positioning member (33) is a C-shaped clip.

7. The electric hub unit as claimed in claim 1, wherein two bearings (211, 212) are located in the tubular portion (21), a washer (18) is mounted to the axle (14) and located between the bearing (15) in the second extension (115) and the bearing (16) located in the tubular portion (21) and close to the reception recess (111).

8. The electric hub unit as claimed in claim 1, wherein two securing units (40) are connected to two ends of the axle (14) and each securing unit (40) has a locking member (41) and a contact part, a first contact part (42) is located between the locking member (41) on one side of the first casing (11) and the tubular portion (21), the first contact part (42) contacts a bearing (211) in the tubular portion (21), a second plate (43) is located between the first contact part (42) and the tubular portion (21), a second contact part (44) is located between the locking member (41) and the second casing (12), the second contact part (44) contacts the second casing (12), the first and second contact parts (42, 44) are adapted to be connected with seat stays of a bicycle.

## Patentansprüche

1. Elektrische Nabeneinheit, umfassend:
eine Nabe (10), bei der es sich um eine Hohlnabe handelt und die aus einem ersten Gehäuse (11) und einem zweiten Gehäuse (12) zusammengesetzt ist, wobei sich eine elektrische Einheit (13) zwischen dem ersten und dem zweiten Gehäuse (11, 12) befindet, eine Achse (14) durch zwei jeweilige Mittelpunkte des ersten und zweiten Gehäuses (11, 12) verläuft, das erste Gehäuse (11) eine Aufnahmevertiefung (111) aufweist, die in einer Seite davon definiert ist, sowie mehrere Kerben (112), die in einem Innenumfang der Aufnahmevertiefung (111) definiert sind, ein erster Ansatz (113) und ein zweiter Ansatz (115) axial vom ersten Gehäuse (11) aus und in entgegengesetzte Richtungen verlaufen,
**dadurch gekennzeichnet, dass** sie ferner umfasst:
ein Lager (15), das in einer Innenseite des zweiten Ansatzes (115) angeordnet ist;
eine Aufnahmeeinheit (20) mit einem röhrenförmigen Abschnitt (21), der einen abgestuften Abschnitt (22) aufweist, der sich von der Außenseite des röhrenförmigen Abschnitts (21) aus radial erstreckt;
eine Sperreinheit (30) mit einem Grundelement (31) und einem Sperrring (34), wobei sich das Grundelement (31) am abgestuften Abschnitt (22) befindet und mehrere Sperrklinken (32) aufweist, der Sperrring (34) mehrere Zähne (341) aufweist, die entsprechend den Kerben (112) angeordnet sind, der Sperrring (34) mehrere Sperrzähne (342) aufweist, die in einem Innenumfang davon definiert sind, der Sperrring (34) in der Aufnahmevertiefung (111) angeordnet ist, die Zähne (341) mit den Kerben (112) in Eingriff stehen, die Aufnahmeeinheit (20) außen an dem ersten Gehäuse (11) angebracht ist und an der Achse (14) angebracht ist, die Sperrklinken (32) mit den Sperrzähnen (342) in Eingriff stehen, ein Lager (16) und eine Platte (17) zwischen dem abgestuften Abschnitt (22) des röhrenförmigen Abschnitts (21) und dem ersten Ansatz (113) angeordnet sind.

2. Elektrische Nabeneinheit nach Anspruch 1, wobei mehrere Kerben (112) axial im Innenumfang der Aufnahmevertiefung (111) definiert sind, ein röhrenförmiger erster Ansatz (113) axial vom ersten Gehäuse (11) aus verläuft und eine Rille (114) in einem Innenumfang des ersten Ansatzes (113) definiert ist, der abgestufte Abschnitt (22) des röhrenförmigen Abschnitts (21) einen radial darin definierten Positionierungsschlitz (23) aufweist, die ringförmige erste Platte (17) zwischen der Rille (114) und dem Positionierungsschlitz (23) platziert ist, ein röhrenförmiger zweiter Ansatz (115) axial von dem ersten Gehäuse (11) aus und in eine Richtung gegenüber der des ersten Ansatzes (113) verläuft, sich ein Anschlag (116) nach innen und von einem Innenumfang des zweiten Ansatzes (115) aus radial erstreckt, das Lager (15) im Inneren des zweiten Ansatzes (115) angeordnet ist und eine Seite des Anschlags (116) berührt.

3. Elektrische Nabeneinheit nach Anspruch 1, wobei das erste Gehäuse (11) mehrere Rippen (117) aufweist, die von seinem Innenumfang aus radial verlaufen und um den zweiten Ansatz (115) herum angeordnet sind, jede der Rippen (117) eine Dicke aufweist, die in einer Richtung weg von dem zweiten Ansatz (115) schmaler wird.

4. Elektrische Nabeneinheit nach Anspruch 1, wobei der röhrenförmige Abschnitt (21) eine daran befestigte Schwungradeinheit (24) zum Antreiben der Aufnahmeeinheit (20) aufweist.

5. Elektrische Nabeneinheit nach Anspruch 1, wobei das Grundelement (31) einteilig mit dem abgestuften Abschnitt (22) geformt ist und mehrere radial darin definierte Eingriffsvertiefungen (311) aufweist, die Sperrklinken (32) in den Eingriffsvertiefungen (311) angeordnet sind, das Grundelement (31) ein Positionierungselement (33) aufweist, das die Sperrklinken (32) berührt.

6. Elektrische Nabeneinheit nach Anspruch 5, wobei das Positionierungselement (33) ein Sprengring ist.

7. Elektrische Nabeneinheit nach Anspruch 1, wobei zwei Lager (211, 212) in dem röhrenförmigen Abschnitt (21) angeordnet sind, eine Unterlegscheibe (18) an der Achse (14) angebracht und zwischen dem Lager (15) in dem zweiten Ansatz (115) und dem Lager (16) angeordnet ist, das sich in dem röhrenförmigen Abschnitt (21) und nahe der Aufnahmevertiefung (111) befindet.

8. Elektrische Nabeneinheit nach Anspruch 1, wobei zwei Sicherungseinheiten (40) mit zwei Enden der Achse (14) verbunden sind und jede Sicherungseinheit (40) ein Arretierungselement (41) und ein Kontaktteil aufweist, ein erstes Kontaktteil (42) zwischen dem Arretierungselement (41) auf einer Seite des ersten Gehäuses (11) und dem röhrenförmigen Abschnitt (21) angeordnet ist, das erste Kontaktteil (42) ein Lager (211) in dem röhrenförmigen Abschnitt (21) berührt, eine zweite Platte (43) zwischen dem ersten Kontaktteil (42) und dem röhrenförmigen Abschnitt (21) angeordnet ist, ein zweites Kontaktteil (44) zwischen dem Arretierungselement (41) und dem zweiten Gehäuse (12) angeordnet ist, das zweite Kontaktteil (44) das zweite Gehäuse (12) berührt, das erste und zweite Kontaktteil (42, 44) so ausgelegt sind, dass sie mit Sattelstreben eines Fahrrads verbunden werden.

## Revendications

1. Unité de moyeu électrique comprenant :
un moyeu (10) qui est un moyeu creux et composé d'un premier carter (11) et d'un second carter (12), une unité électrique (13) étant située entre les premier et second carters (11, 12), un essieu (14) s'étendant à travers deux centres respectifs des premier et second carters (11, 12), le premier carter (11) ayant une cavité de réception (111) définie dans un côté de celui-ci et de multiples encoches (112) définies dans une périphérie intérieure de la cavité de réception (111), une première extension (113) et une seconde extension (115) s'étendant axialement à partir du premier carter (11) et dans des directions opposées,
**caractérisée par le fait qu'**elle comprend en outre :
un palier (15) situé dans un intérieur de la seconde extension (115) ;
une unité de douille (20) ayant une partie tubulaire (21) qui a une partie épaulée (22) s'étendant radialement à partir de l'extérieur de la partie tubulaire (21) ;
une unité d'encliquetage (30) ayant une base (31) et une couronne à rochet (34), la base (31) étant située sur la partie épaulée (22) et ayant de multiples cliquets (32), la couronne à rochet (34) ayant de multiples dents (341) qui sont situées en correspondance des encoches (112), la couronne à rochet (34) ayant de multiples dents d'encliquetage (342) définies dans une périphérie intérieure de celle-ci, la couronne à rochet (34) étant située dans la cavité de réception (111), les dents (341) étant engagées avec les encoches (112), l'unité de douille (20) étant montée sur l'extérieur du premier carter (11) et montée sur l'essieu (14), les cliquets (32) étant engagés avec les dents d'encliquetage (342), un palier (16) et une plaque (17) étant situés entre la partie épaulée (22) de la partie tubulaire (21) et la première extension (113).

2. Unité de moyeu électrique selon la revendication 1, dans laquelle de multiples encoches (112) sont définies axialement dans la périphérie intérieure de la cavité de réception (111), une première extension tubulaire (113) s'étend axialement à partir du premier carter (11) et une rainure (114) est définie dans une périphérie intérieure de la première extension (113), la partie épaulée (22) de la partie tubulaire (21) a une fente de positionnement (23) définie radialement dans celle-ci, la première plaque de forme annulaire (17) est située entre la rainure (114) et la fente de positionnement (23), une seconde extension tubulaire (115) s'étend axialement à partir du premier carter (11) et dans une direction opposée à celle de la première extension (113), un arrêt (116) s'étend vers l'intérieur et radialement à partir d'une périphérie intérieure de la seconde extension (115), le palier (15) est situé dans l'intérieur de la seconde extension (115) et est en contact avec un côté de l'arrêt (116).

3. Unité de moyeu électrique selon la revendication 1, dans laquelle le premier carter (11) a de multiples nervures (117) s'étendant radialement à partir de la périphérie intérieure de celui-ci et situées autour de la seconde extension (115), chacune des nervures (117) a une épaisseur qui est rétrécie dans une direction allant à l'opposé de la seconde extension (115).

4. Unité de moyeu électrique selon la revendication 1, dans laquelle la partie tubulaire (21) a une unité de volant (24) montée sur celle-ci de façon à entraîner l'unité de douille (20).

5. Unité de moyeu électrique selon la revendication 1, dans laquelle la base (31) est formée d'un seul tenant avec la partie épaulée (22) et a de multiples cavités d'engagement (311) définies radialement dans celle-ci, les cliquets (32) sont situées dans les cavités d'engagement (311), la base (31) a un élément de positionnement (33) qui est en contact avec les cliquets (32).

6. Unité de moyeu électrique selon la revendication 5, dans laquelle l'élément de positionnement (33) est un anneau élastique en forme de C.

7. Unité de moyeu électrique selon la revendication 1, dans laquelle deux paliers (211, 212) sont situés dans la partie tubulaire (21), une rondelle (18) est montée sur l'essieu (14) et située entre le palier (15) dans la seconde extension (115) et le palier (16) situé dans la partie tubulaire (21) et proche de la cavité de réception (111).

8. Unité de moyeu électrique selon la revendication 1, dans laquelle deux unités de fixation (40) sont reliées à deux extrémités de l'essieu (14), et chaque unité de fixation (40) a un élément de verrouillage (41) et une partie de contact, une première partie de contact (42) est située entre l'élément de verrouillage (41) sur un côté du premier carter (11) et la partie tubulaire (21), la première partie de contact (42) est en contact avec un palier (211) de la partie tubulaire (21), une seconde plaque (43) est située entre la première partie de contact (42) et la partie tubulaire (21), une seconde partie de contact (44) est située entre l'élément de verrouillage (41) et le second carter (12), la seconde partie de contact (44) est en contact avec le second carter (12), les première et seconde parties de contact (42, 44) sont aptes à être reliées à des haubans d'une bicyclette.
